Europäisches Patentamt

European Patent Office

Office européen des brevets

(11) Numéro de publication : **0 441 671 A1**

# (12) DEMANDE DE BREVET EUROPEEN

(21) Numéro de dépôt : **91400159.9**

(51) Int. Cl.⁵ : **F16D 3/205**

(22) Date de dépôt : **24.01.91**

(30) Priorité : **08.02.90 FR 9001473**

(43) Date de publication de la demande :
**14.08.91 Bulletin 91/33**

(84) Etats contractants désignés :
**DE ES GB IT**

(71) Demandeur : **GLAENZER SPICER**
**10 Rue Jean-Pierre Timbaud**
**F-78300 Poissy (FR)**

(72) Inventeur : **Van Dest, Jean-Claude**
**27, Chemin du Renard**
**F-91250 Saintry s/Seine (FR)**

(74) Mandataire : **Moncheny, Michel et al**
**c/o Cabinet Lavoix 2 Place d'Estienne d'Orves**
**F-75441 Paris Cedex 09 (FR)**

(54) **Joint homocinétique tripode, à réaction axiale réduite.**

(57)    Dans un joint homocinétique tripode, les galets (31) sont montés sur les tourillons (13) du tripode (11) par l'intermédiaire d'au moins deux séries de corps roulants, une série de corps roulants sphériques (34) et une série de corps roulants cylindriques (35), ces derniers ayant un diamètre légèrement inférieur.

EP 0 441 671 A1

Jouve, 18, rue Saint-Denis, 75001 PARIS

FIG.1

## JOINT HOMOCINETIQUE TRIPODE, A REACTION AXIALE REDUITE

La présente invention concerne les joints homocinétiques du type tripode, utilisés notamment dans des transmissions de véhicules automobiles.

On connaît de tels joints destinés à être interposés entre un élément menant et un élément mené, et comprenant un premier organe ou tripode comportant trois tourillons radiaux espacés angulairement de 120°, sur lesquels sont montés rotatifs et coulissants avec interposition d'éléments de roulement, des galets de forme extérieure sphérique, et un deuxième organe appelé tulipe, délimitant trois chemins de roulement qui sont eux aussi espacés angulairement de 120°, présentent en section par un plan perpendiculaire à leur ligne moyenne, une forme circulaire, et coopèrent avec les galets précités.

Dans un tel joint connu les éléments de roulement sont des aiguilles interposées entre la surface interne cylindrique des galets et la surface adjacente des tourillons.

On sait également que lorsque le joint fonctionne sous angle, des réactions axiales cycliques sinusoïdales sont engendrées, dont la fréquence est égale à trois fois la fréquence correspondant à la rotation du joint, et dont l'amplitude est proportionnelle au couple transmis par le joint et sensiblement proportionnelle à l'angle de travail de ce joint.

En effet, lors de ce fonctionnement sous angle, les galets se déplacent axialement le long des tourillons du tripode, ce déplacement s'effectuant également suivant une loi sinusoïdale. Au cours de ce mouvement axial, chaque galet glisse sur ses aiguilles avec un certain frottement et l'effort transmis aux pistes des chemins de roulement de la tulipe engendre une réaction dont une composante est dirigée selon l'axe de la tulipe.

D'une façon générale, lorsqu'un mouvement angulaire statique ou dynamique est imprimé au joint, les galets se déplacent axialement le long des bras du tripode et il en résulte un couple résistant proportionnel au couple transmis par le joint, au rayon de base de ce joint et au coefficient de frottement entre le galet et les aiguilles.

Le but de l'invention est de diminuer les réactions axiales et les résistances aux mouvements axiaux et d'oscillation inhérents à ce type de joint, de façon à améliorer le confort du véhicule auquel il est intégré.

A cet effet, l'invention a pour objet un joint à tripode du type défini ci-dessus, caractérisé en ce qu'il est prévu entre chaque galet et le tourillon sur lequel il est monté, au moins deux séries d'éléments de roulement de diamètres différents, venant successivement en contact avec les deux parois en regard de chaque galet et du tourillon associé, sous l'effet d'une charge croissante

Suivant d'autres caractéristiques :

– les éléments de roulement d'au moins l'une des séries sont des corps roulants sphériques ;

– les éléments de roulement d'au moins une des séries sont des corps roulants cylindriques de section circulaire, dont le diamètre est légèrement inférieur au diamètre des corps roulants sphériques ;

– il est prévu une série de corps roulants cylindriques disposée axialement entre deux séries de corps roulants sphériques ;

– les corps roulants sphériques et les corps roulants cylindriques sont alternés circonférentiellement ;

L'invention va être décrite plus en détail ci-dessous en se référant aux dessins annexés donnés uniquement à titre d'exemple et sur lesquels :

La Fig. 1 est une vue en coupe longitudinale d'un joint selon l'invention ;

La Fig. 2 est une vue en coupe suivant la ligne 2-2 de la Fig. 1 ;

Les Fig. 3 et 4 sont des vues de détail développées montrant deux agencements différents de corps roulants ;

La Fig. 5 est un graphique illustrant l'avantage procuré par un joint selon l'invention.

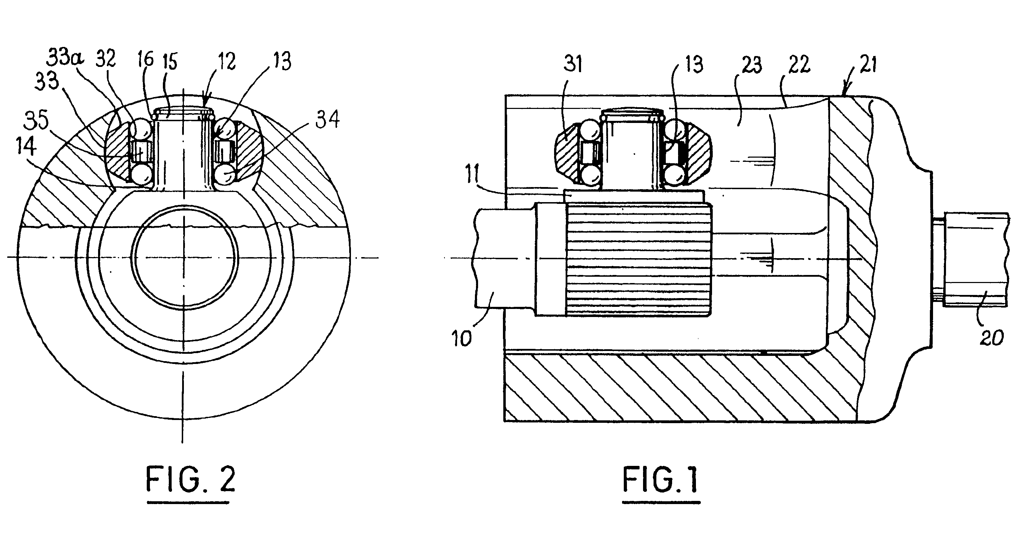

On voit aux Fig. 1 et 2 un joint homocinétique de type tripode, interposé entre deux arbres 10 et 20. L'arbre 10 porte un moyeu 11 à partir duquel s'étendent trois bras radiaux 12 délimitant des tourillons 13 dont les axes sont espacés à 120°. Chaque tourillon est relié au moyeu par un congé 14. A son extrémité libre, le tourillon comporte une gorge annulaire 15 destinée à recevoir une rondelle de retenue 16.

Le deuxième arbre porte à son extrémité une tulipe 21 comportant trois branches 22 qui délimitent trois chemins de roulement 23 ayant dans un plan perpendiculaire à leur ligne moyenne une section circulaire. Les lignes moyennes de ces chemins de roulement peuvent être rectilignes comme représenté au dessin ou incurvées.

Entre les tourillons 13 et les chemins de roulement 23 sont interposés des galets 31 délimitant d'une part une surface interne cylindrique 32 coaxiale à la surface des tourillons et d'autre part une surface externe sphérique 33 coopérant avec le chemin de roulement associé. Des surfaces de raccordement tronconiques 33ª peuvent être prévues aux deux extrémités axiales des galets. Entre la surface interne de chaque galet et la surface adjacente du tourillon associé, sont disposés des éléments de roulement sur lesquels porte plus précisément l'invention. En effet comme réprésenté aux Fig. 1 à 3, les éléments de roulement comprennent d'une part des corps roulants sphériques 34 ou billes disposés suivant deux rangées annulaires situées respectivement au voisinage de la base et au voisinage de la partie d'extrémité de chaque tourillon, et d'autre part une série de corps roulants cylindriques 35 d'axes parallèles à l'axe du tourillon et disposés entre les deux rangées de billes.

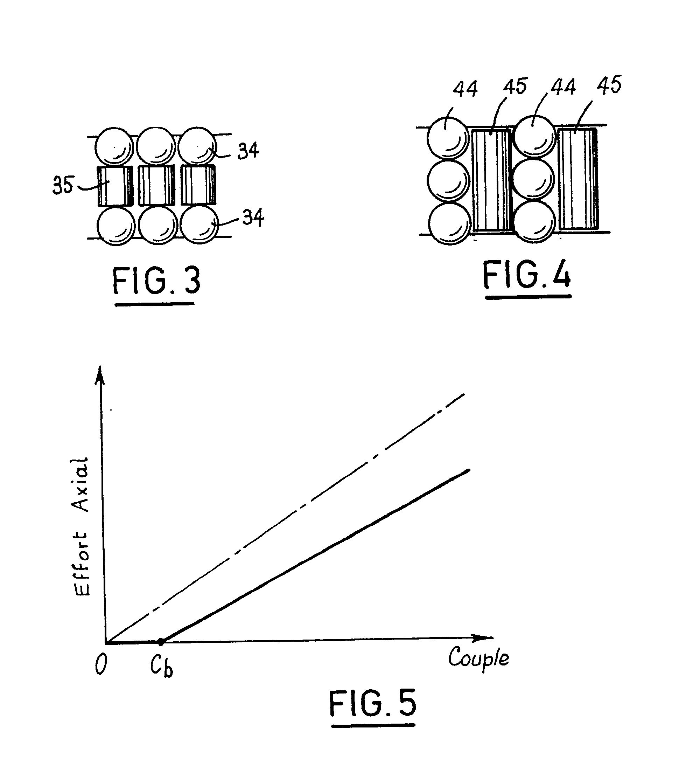

Cette disposition est représentée plus en détail sur la vue développée de la Fig. 3.

Les corps roulants sphériques ont un diamètre légèrement supérieur à celui des corps roulants cylindriques, la différence de diamètre étant de préférence comprise entre 3 et 15 micromètres.

Le fonctionnement d'un tel joint est le suivant :

Tout d'abord si le joint fonctionne sous un couple relativement faible, du fait de la différence de diamètre entre les corps roulants sphériques et les corps roulants cylindriques, seuls les premiers sont sollicités de sorte que l'effort nécessaire au déplacement axial des galets 31 le long des tourillons 13 est pratiquement nul puisque ce déplacement s'effectue sans frottement.

Le couple augmentant, les corps roulants sphériques sont soumis à une charge progressivement croissante qui provoque un léger écrasement, répondant aux formules bien connues de Hertz. Au-delà d'une valeur déterminée $C_b$, l'écrasement des corps roulants sphériques est suffisant pour que les corps roulants cylindriques 35 viennent en appui sur les deux surfaces en regard 13, 32. Les charges correspondant à l'excédent de couple par rapport à $C_b$ se répartissent entre les corps roulants sphériques et cylindriques, il s'ensuit au-delà du couple $C_b$ un effort nécessaire au mouvement axial des galets sensiblement égal à la charge appliquée aux corps roulants cylindriques, multiplié par le coefficient de frottement entre ces derniers et les galets, la charge supportée par les corps roulants sphériques engendrant un effort pratiquement nul.

Ce type de fonctionnement est illustré sur le schéma de la Fig. 5 qui représente la valeur de l'effort axial en fonction du couple transmis par le joint. Sur ce graphique, la droite en trait mixte représente l'effort axial en fonction du couple pour un joint de construction classique, tandis que la courbe en trait plein représente cet effort dans le cas d'un joint selon l'invention.

La partie horizontale du second tracé de O à $C_b$ correspond à la charge des seuls organes roulants sphériques tandis que la seconde partie correspond à la mise en charge des corps roulants cylindriques. Le gain procuré par la disposition très simple de l'invention est clairement visible sur ce graphique.

On a indiqué précédemment une plage préférentielle comprise entre 3 et 15 micromètres pour la différence de diamètre entre les corps roulants sphériques et les corps roulants cylindriques. Cette plage se justifie de la façon suivante :

Au-dessous d'une valeur de 3 micromètres, le gain produit par l'effet de roulement sous faible couple serait trop faible pour justifier le surcoût résultant de la présence de deux séries d'éléments différents. Au-dessus de la valeur de 15 micromètres, les contraintes hertziennes sur les corps roulants sphériques risqueraient de devenir prohibitives. Cette plage peut cependant varier selon la nature du matériau constituant les billes.

On notera également que les moyens de rétention axiale des galets sont ici particulièrement simples : les corps roulants sphériques sont de préférence montés avec une légère précharge dans l'intervalle entre les tourillons et les galets, le degré d'interférence pouvant être de l'ordre de quelques micromètres. La rondelle de butée 16 introduite dans la gorge 15 du tourillon assure la retenue des billes 34. Lorsqu'on tente d'extraire le galet, les corps roulants sphériques roulent jusqu'à venir en butée contre cette rondelle 16. Dès lors que ces corps roulants sphériques sont en contact avec cette butée, ils ne peuvent plus rouler et le galet ne peut être extrait qu'en lui appliquant un effort axial important égal à l'effort de serrage résultant de la précharge des corps roulants dans l'intervalle de tourillonnement, multiplié par le coefficient de frottement entre les corps roulants et l'alésage du galet.

Dans la variante représentée à la Fig. 4, les corps roulants sont disposés d'une façon différente : les corps roulants cylindriques 45 ont une longueur plus importante que dans l'exemple de la figure 3 et s'étendent sur pratiquement toute la longueur de l'intervalle de tourillonnement entre le galet et son tourillon. Les corps roulants sphériques 44 et les corps roulants cylindriques sont alors disposés de façon alternée suivant une direction circonférentielle dans l'intervalle de tourillonnement, trois corps roulants sphériques 44 alignés axialement étant dans l'exemple choisi disposés entre deux corps roulants cylindriques successifs.

Bien entendu d'autres dispositions de corps roulants sphériques et cylindriques peuvent être utilisées sans pour autant sortir du cadre du présent brevet.

## Revendications

1. Joint homocinétique, destiné à être interposé entre un élément menant et un élément mené, comprenant un premier organe ou tripode (11, 12) comportant trois tourillons radiaux (13) espacés angulairement de 120°, sur lesquels sont montés rotatifs et coulissants avec interposition d'éléments de roulement, des galets (31) de forme extérieure sphérique, et un deuxième organe (21) appelé tulipe, délimitant trois chemins de roulement (23) qui sont eux aussi espacés augulairement de 120°, présentent en section par un plan perpendiculaire à leur ligne moyenne, une forme circulaire, et coopèrent avec les galets précités, caractérisé en ce qu'il est prévu entre chaque galet (31) et le tourillon (13) sur lequel il est monté, au moins deux séries d'éléments (34, 35 ; 44,45) de roulement de diamètres différents, venant successivement en contact avec les deux parois en regard de chaque galet et du tourillon associé, sous l'effet d'une charge croissante.

2. Joint homocinétique suivant la revendication 1, caractérisé en ce que les éléments de roulement desdites séries sont disposés de façon alternée.

3. Joint homocinétique suivant l'une quelconque des revendications 1 et 2, caractérisé en ce que les éléments de roulement d'au moins une des séries sont des corps roulants sphériques (34, 44).

4. Joint homocinétique suivant la revendication 3, caractérisé en ce que les éléments de roulement d'au moins une des séries sont des corps roulants cylindriques (35 ; 45) de section circulaire dont le diamètre est légèrement inférieur au diamètre des corps roulants sphériques.

5. Joint homocinétique suivant la revendication 4, caractérisé en ce que la différence de diamètre entre corps roulants sphériques et cylindriques est comprise entre 3 et 15 micromètres.

6. Joint homocinétique suivant l'une quelconque des revendications 4 à 5, caractérisé en ce qu'il est prévu une série de corps roulants cylindriques (35) disposée axialement entre deux séries de corps roulants sphériques (34).

7. Joint homocinétique suivant l'une quelconque des revendications 4 et 5, caractérisé en ce que les corps roulants sphériques (44) et les corps roulants cylindriques (45) sont alternés circonférentiellement ;

8. Joint homocinétique suivant l'une quelconque des revendications 3 à 7, caractérisé en ce que les éléments de roulement sphériques sont introduits avec une précharge dans l'intervalle de tourillonnement entre les galets et les tourillons et il est prévu un organe de butée (16) au voisinage de l'extrémité libre du tourillon pour retenir ces organes de roulement.

FIG.1

FIG.2

FIG. 3

FIG. 4

FIG. 5

**Office européen des brevets**

# RAPPORT DE RECHERCHE EUROPEENNE

Numéro de la demande

EP 91 40 0159

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 490 251 (ROETHLISBERGER) * Colonne 3, figures 6,7 * | 1,3,4 | F 16 D 3/205 |
| X | US-A-3 877 251 (WAHLMARK) * En entier * | 1 | |
| A | | 3,4 | |
| X | FR-A-2 199 825 (WAHLMARK) * Pages 14-19; figures 7-10 * | 1 | |
| A | | 4 | |
| X | FR-A-2 476 251 (GLAENZER SPICER) * En entier * | 1 | |
| A | | 4 | |
| A | FR-A-2 554 528 (GLAENZER SPICER) * En entier * | 4,5 | |
| A | FR-A-2 600 730 (RENAULT) | | |

### DOMAINES TECHNIQUES RECHERCHES (Int. Cl.5)

F 16 D 3/00

Le présent rapport a été établi pour toutes les revendications

| Lieu de la recherche | Date d'achèvement de la recherche | Examinateur |
|---|---|---|
| LA HAYE | 11-04-1991 | BALDWIN D.R. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)